# EUROPEAN PATENT APPLICATION

(11) **EP 4 485 782 A1**
(43) Date of publication of application: **01.01.2025**
(21) Application number: 23777760.2
(22) Date of filing: 06.03.2023
(51) Int. Cl.: H02M 5/12

(54) **SOLID-STATE TRANSFORMER AND POWER SUPPLY DEVICE**

(30) Priority: 30.03.2022 CN 202210332087
(71) Applicant: Huawei Digital Power Technologies Co., Ltd., Shenzhen, Guangdong 518043 (CN)
(72) Inventor: SHU, Zhou, Shenzhen, Guangdong 518043 (CN); ZHANG, Xiaofei, Shenzhen, Guangdong 518043 (CN)
(74) Representative: Maiwald GmbH
(86) International application number: PCT/CN2023/079761
(87) International publication number: WO 2023/185382

(57) **Abstract**

A solid-state transformer and a power supply device are provided, to improve a fault-tolerant operation capability of the solid-state transformer. The solid-state transformer includes a plurality of power conversion units connected in parallel. Each power conversion unit includes a plurality of single-phase conversion units, and each single-phase conversion unit includes a first switching unit, a voltage conversion unit, and a second switching unit. A first end of the first switching unit is a first input end of the single-phase conversion unit, and a second end of the first switching unit is connected to a first input end of the voltage conversion unit. A second input end of the voltage conversion unit is connected to a first end of the second switching unit, and an output end of the voltage conversion unit is connected to an output end of the solid-state transformer. A second end of the second switching unit is a second input end of the single-phase conversion unit, and a third end of the second switching unit is connected to one of other single-phase conversion units. The voltage conversion unit includes a plurality of voltage conversion circuits connected in series.

## Description

### CROSS-REFERENCE TO RELATED APPLICATIONS

This application claims priority to Chinese Patent Application No. 202210332087.7, filed with the China National Intellectual Property Administration on March 30, 2022 and entitled "SOLID-STATE TRANSFORMER AND POWER SUPPLY DEVICE", which is incorporated herein by reference in its entirety.

### TECHNICAL FIELD

This application relates to the field of power electronics technologies, and in particular, to a solid-state transformer and a power supply device.

### BACKGROUND

A solid-state transformer is also referred to as a power electronic transformer. In the solid-state transformer, a power electronics conversion technology is combined with a high-frequency electric energy conversion technology that is according to an electromagnetic induction principle, to convert electric energy with one power characteristic into electric energy with another power characteristic.

The solid-state transformer is mainly used in a medium-voltage grid. The solid-state transformer may step down a voltage output by the medium-voltage grid, and output a steppeddown voltage to a low-voltage power supply load. The solid-state transformer usually includes a plurality of power conversion units. Each power conversion unit includes a plurality of single-phase conversion units, and each single-phase conversion unit converts one phase of a three-phase alternating current transmitted on the medium-voltage grid. However, in an existing solid-state transformer, all single-phase conversion units in a power conversion unit share a neutral line. When a component in any single-phase conversion unit is faulty, operating of other single-phase conversion units in the power conversion unit is affected, and the entire power conversion unit cannot be used. Consequently, conversion power of the solid-state transformer is reduced.

### SUMMARY

This application provides a solid-state transformer and a power supply device, to improve a fault tolerance capability, and improve conversion power of the solid-state transformer.

According to a first aspect, this application provides a solid-state transformer. The solid-state transformer includes a plurality of power conversion units connected in parallel.

Specifically, each power conversion unit includes a plurality of single-phase conversion units, each power conversion unit includes a plurality of single-phase conversion units, and each single-phase conversion unit includes a first switching unit, a voltage conversion unit, and a second switching unit. A first end of the first switching unit is a first input end of the single-phase conversion unit, and a second end of the first switching circuit is connected to a first input end of the voltage conversion unit. A second input end of the voltage conversion unit is connected to a first end of the second switching unit, and an output end of the voltage conversion unit is connected to an output end of the solid-state transformer. A second end of the second switching unit is a second input end of the single-phase conversion unit, and a third end of the second switching unit is connected to one of the other single-phase conversion units in the plurality of single-phase conversion units. The voltage conversion unit includes a plurality of voltage conversion circuits connected in series, and the voltage conversion unit is configured to: when determining that any voltage conversion circuit is faulty, control the connected first switching unit and second switching unit to be disconnected; or when another single-phase conversion unit is faulty, disconnect, by using the connected second switching unit, from the faulty single-phase conversion unit.

By using the solid-state transformer, when a voltage conversion unit in any single-phase conversion unit is faulty, a single-phase conversion unit that is not faulty may be disconnected from the faulty single-phase conversion unit, so as to isolate a fault source. In this case, only the faulty single-phase conversion unit cannot operate, and other single-phase conversion units that are not faulty can still operate normally. This improves a fault tolerance capability of the solid-state transformer, and improves conversion power of the solid-state transformer because the entire power conversion unit does not need to be disconnected.

In a possible implementation, the voltage conversion circuit includes a first power conversion circuit, a high-frequency transformer, and a second power conversion circuit, and the first power conversion circuit and the second power conversion circuit are coupled by using the high-frequency transformer.

By using the solid-state transformer, the first power conversion circuit and the second power conversion circuit are respectively connected to an external power supply and a load, and perform conversion to output a voltage required by the load.

In a possible implementation, the first switching unit includes a first switch.

A first electrode of the first switch forms the first end of the first switching unit, and a second electrode of the first switch forms the second end of the first switching unit and is connected to the first input end of the voltage conversion unit.

By using the solid-state transformer, a status of the first switch is controlled, so that a connection manner in which the voltage conversion unit is connected to the external power supply can be controlled.

In a possible implementation, the second switching unit includes a second switch and a third switch.

Specifically, both a first electrode of the second switch and a first electrode of the third switch are connected to the second input end of the voltage conversion unit. A second electrode of the second switch is the second input end of the single-phase conversion unit. A second electrode of the third switch is connected to one of the other single-phase conversion units. The second input end of the single-phase conversion unit is connected to one of the other single-phase conversion units, and the second electrode of the second switch and the second electrode of the third switch are connected to different single-phase conversion units.

By using the solid-state transformer, statuses of the second switch and the third switch are controlled, so that a status of a connection to another single-phase conversion unit can be controlled. When a single-phase conversion unit is faulty, the second switch or the third switch can be controlled to disconnect the faulty single-phase conversion unit from a single-phase conversion unit that is not faulty, so as to isolate a fault source. This ensures that the single-phase conversion unit that is not faulty can operate normally.

In a possible implementation, one of the plurality of voltage conversion circuits is a target voltage conversion circuit, and the target voltage conversion circuit is connected to the first switching unit and the second switching unit. The target voltage conversion circuit is specifically configured to: when any voltage conversion circuit is faulty, control the connected first switching unit and second switching unit to be disconnected; or when another single-phase conversion unit is faulty, disconnect, by using the connected second switching unit, from the faulty single-phase conversion unit.

By using the solid-state transformer, the target voltage conversion circuit controls statuses of two switching units.

In a possible implementation, the plurality of voltage conversion circuits include a first voltage conversion circuit and a second voltage conversion circuit. The first voltage conversion circuit is connected to the first switching unit. The second voltage conversion circuit is connected to the second switching unit.

Specifically, the first voltage conversion circuit may control, when any voltage conversion circuit is faulty, the connected first switching unit to be disconnected. The second voltage conversion circuit may control, when any voltage conversion circuit is faulty, the connected second switching unit to be disconnected; or disconnect, when another single-phase conversion unit is faulty, from the faulty single-phase conversion unit by using the connected second switching unit.

By using the solid-state transformer, the first voltage conversion circuit controls a status of the first switching unit, and the second voltage conversion circuit controls a status of the second switching unit.

In a possible implementation, the power conversion unit further includes a protection unit connected to the first end of the first switching unit.

In a possible implementation, there is a first transmission channel between the plurality of voltage conversion circuits, and each voltage conversion circuit determines fault statuses of other voltage conversion circuits based on the first transmission channel.

By using the solid-state transformer, the plurality of voltage conversion circuits can communicate by using the first transmission channel, to determine a fault status between the plurality of voltage conversion circuits.

In a possible implementation, there is a second transmission channel between the plurality of single-phase conversion units, and each single-phase conversion unit determines fault statuses of the other single-phase conversion units based on the second transmission channel.

By using the solid-state transformer, the plurality of single-phase conversion units can communicate by using the second transmission channel, to determine a fault status between the plurality of single-phase conversion units.

According to a second aspect, an embodiment of this application provides a power supply device. The power supply device includes a cabinet and the solid-state transformer provided in any one of the first aspect of this application or the possible designs of the first aspect. The solid-state transformer is disposed in the cabinet, and a conductive housing is grounded by using the cabinet.

### BRIEF DESCRIPTION OF DRAWINGS

FIG. 1 is a schematic diagram of an application scenario of a solid-state transformer according to an embodiment of this application;
FIG. 2 is a schematic diagram of a structure of a single-phase conversion unit according to an embodiment of this application;
FIG. 3 is a schematic diagram in which a voltage conversion circuit is faulty according to an embodiment of this application;
FIG. 4 is a schematic diagram of a structure of a solid-state transformer according to an embodiment of this application;
FIG. 5 is a schematic diagram of a structure of a power conversion unit according to an embodiment of this application;
FIG. 6 is a schematic diagram of a structure of a first switching unit according to an embodiment of this application;
FIG. 7 is a schematic diagram of a structure of a voltage conversion circuit according to an embodiment of this application;
FIG. 8 is a schematic diagram of an operating process of a solid-state transformer according to an embodiment of this application; and
FIG. 9 is a schematic diagram of a structure of a second switching unit according to an embodiment of this application.

### DESCRIPTION OF EMBODIMENTS

To make the objectives, technical solutions, and advantages of this application clearer, the following further describes this application in detail with reference to the accompanying drawings.

To facilitate understanding of the solid-state transformer provided in embodiments of this application, the following first describes an application scenario of the solid-state transformer.

The solid-state transformer may serve as an intermediate device between a grid and a load device, and is configured to convert a voltage in the grid for use by the load device. Usually, the solid-state transformer connects a medium-voltage grid and a low-voltage load. For example, a data center usually includes a plurality of load devices (such as servers). The medium-voltage grid usually supplies a medium-voltage (for example, 10 kV) alternating current to an equipment room, but the load device in the data center usually requires a low-voltage (for example, 220 V or 400 V) direct current or alternating current. Therefore, a voltage of the medium-voltage grid may be processed by using the solid-state transformer, to convert the voltage into a voltage of a magnitude and a type required by the load device. Alternatively, in some other application scenarios, the solid-state transformer can convert electric energy generated on a low-voltage side and then transmit the converted electric energy to the medium-voltage grid. For example, the solid-state transformer may connect the medium-voltage grid to a photovoltaic power station. The solid-state transformer may perform processing like voltage boosting on electric energy generated by the photovoltaic power station, and then transmit the converted electric energy to the medium-voltage grid.

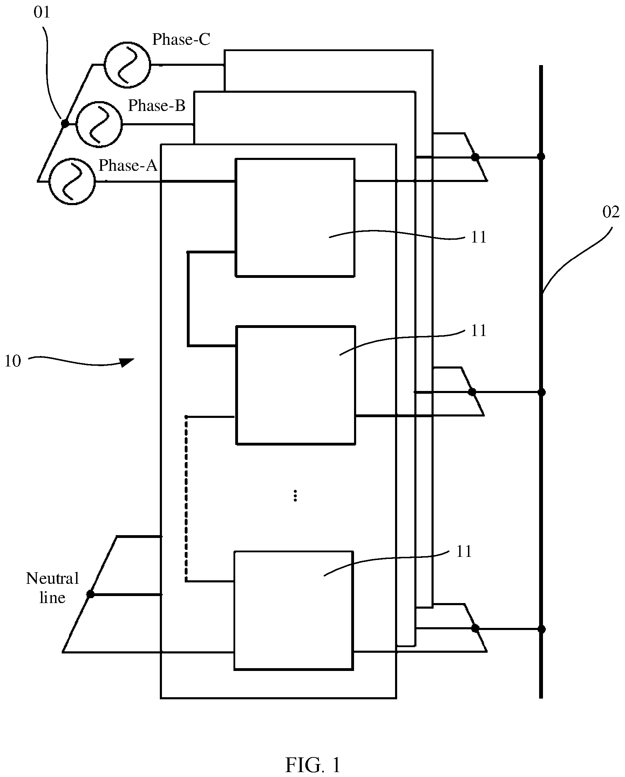

FIG. 1 is a schematic diagram of an application scenario of a solid-state transformer. Refer to FIG. 1. The solid-state transformer is connected to a grid 01 and a load device 02. During specific application, electric energy transmitted on the grid 01 may be a three-phase alternating current. Specifically, the three-phase alternating current may include three single-phase alternating currents with a phase difference of 120 degrees, and the three single-phase alternating currents may be a phase-A alternating current, a phase-B alternating current, and a phase-C alternating current. Each single-phase alternating current may be connected to one single-phase conversion unit 11 in the solid-state transformer. Each single-phase conversion unit 11 may convert one received single-phase alternating current. A plurality of single-phase conversion units 11 may convert the three-phase alternating current transmitted on the grid 01, to output a low-voltage alternating current or direct current for use by the load device 02. The plurality of single-phase conversion units 11 form one power conversion unit.

During actual use, when the solid-state transformer is used in a high-power conversion scenario, conversion power of a single power conversion unit is limited. To implement high-power conversion and meet a requirement of the load device 02, a plurality of power conversion units may be disposed in the solid-state transformer, the plurality of power conversion units may be connected in parallel, and each power conversion unit converts a part of electric energy received by the solid-state transformer.

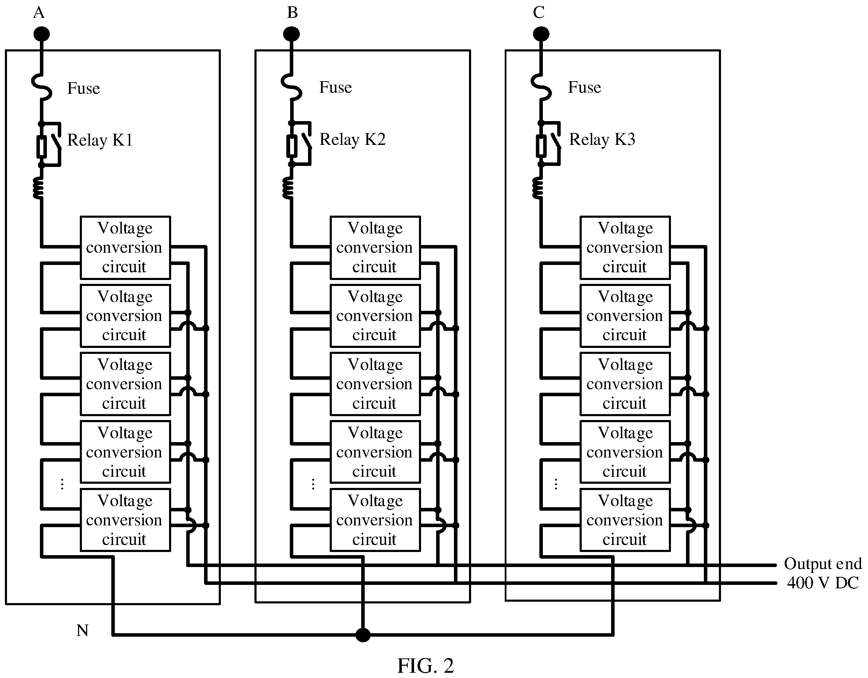

As shown in FIG. 2, each single-phase conversion unit 11 may include a plurality of voltage conversion circuits. Input ends of the plurality of voltage conversion circuits are connected in series, and output ends of the plurality of voltage conversion circuits are connected in parallel. The input ends of the plurality of voltage conversion circuits are connected in series to perform voltage division on a single-phase alternating current. Each voltage conversion circuit receives a part of a voltage and performs conversion, and outputs converted electric energy to the load device 02 through the output end.

During actual use, a quantity of voltage conversion circuits in the single-phase conversion unit 11 may be set based on a voltage amplitude of the single-phase alternating current and a conversion capability of a single voltage conversion circuit. This is not specifically limited herein in this application.

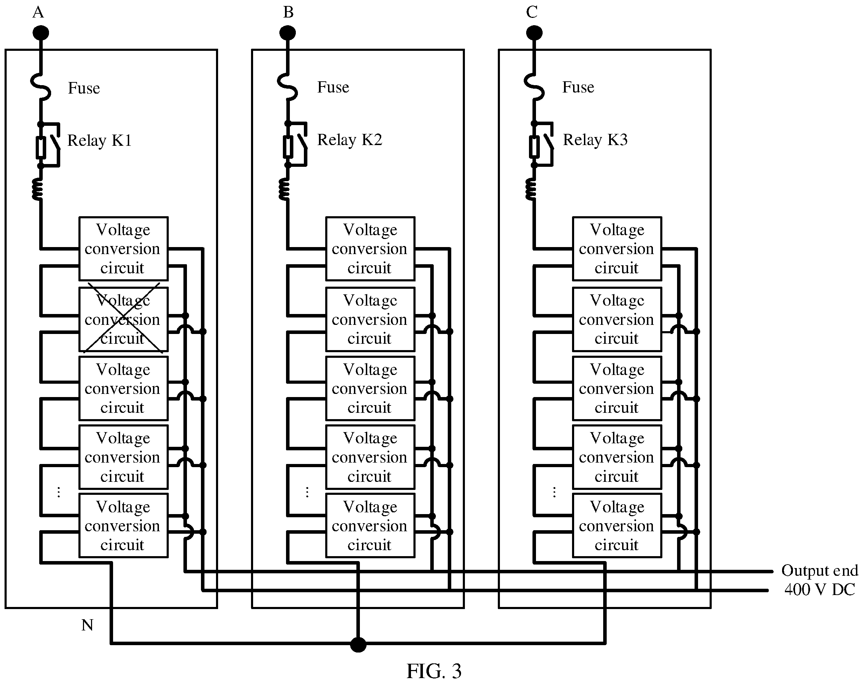

In actual application, all of a plurality of single-phase conversion units in each power conversion unit use a same neutral line N (neutral line, N). Refer to FIG. 3. When a voltage conversion circuit in any single-phase conversion unit is faulty, a potential of the neutral line N changes, and voltage amplitudes borne by two ends of a single-phase conversion unit that is not faulty change, that is, an operating condition of the single-phase conversion unit that is not faulty changes. This affects normal operating of the single-phase conversion unit that is not faulty. During actual use, to ensure safety of the solid-state transformer and a component connected to the solid-state transformer, a power conversion unit in which a faulty single-phase conversion unit is located is turned off. However, conversion power of the solid-state transformer is significantly reduced in this operating manner.

Therefore, an embodiment of this application provides a solid-state transformer that can improve a fault-tolerant operation capability and conversion power when a single-phase conversion unit is faulty.

To clearly understand the solid-state transformer provided in this application, the following provides specific descriptions with reference to the accompanying drawings and specific embodiments.

Terms used in the following embodiments are merely intended to describe specific embodiments, but are not intended to limit this application. Terms "one", "a", "the foregoing", "the", and "the one" of singular forms used in this specification and the appended claims of this application are also intended to include plural forms like "one or more", unless otherwise specified in the context clearly. It should be further understood that in the following embodiments of this application, "at least one" and "one or more" refer to one, two, or more. The term "and/or" is used for describing an association relationship between associated objects, and indicates that three relationships may exist. For example, A and/or B may represent: Only A exists, both A and B exist, and only B exists, where A and B may be singular or plural. The character "/" generally indicates an "or" relationship between the associated objects.

A specific operation method in a method embodiment may also be applied to an apparatus embodiment or a system embodiment. It should be noted that "a plurality of" merely means "two or more" in descriptions of this application. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

It should be noted that in embodiments of this application, the "connection" may be an electrical connection, or may be a communication connection. An electrical connection between two electrical elements may be a direct or indirect connection between the two electrical elements. For example, a connection between A and B may be a direct connection between A and B, or may be an indirect connection between A and B through one or more other electrical elements. For example, that A is connected to B may also be that A is directly connected to C, C is directly connected to B, A and B are connected through C.

Reference to "an embodiment", "some embodiments", or the like described in this specification indicates that one or more embodiments of this application include a specific feature, structure, or characteristic described with reference to embodiments. Therefore, statements such as "in one embodiment", "in some embodiments", "in some other embodiments", and "in still some other embodiments" that appear at different places in this specification do not necessarily refer to a same embodiment, but mean "one or more but not all embodiments", unless otherwise specially emphasized in another manner. The terms "include", "contain", "have", and their variants all mean "include but are not limited to", unless otherwise specifically emphasized in another manner.

It should be noted that a switching transistor in embodiments of this application may be one or more of a plurality of switch devices such as a relay, a metal-oxide semiconductor field-effect transistor (metal-oxide semiconductor field-effect transistor, MOSFET), a bipolar junction transistor (bipolar junction transistor, BJT), an insulated gate bipolar transistor (insulated gate bipolar transistor, IGBT), a gallium nitride (GaN) field-effect transistor, and a silicon carbide (SiC) power transistor. Examples are not enumerated one by one in embodiments of this application. Each switch device may include a first electrode, a second electrode, and a control electrode. The control electrode is used to control the switch device to be turned on or turned off. When the switch device is turned on, a current may be transmitted between the first electrode and the second electrode of the switch device. When the switch device is turned off, a current cannot be transmitted between the first electrode and the second electrode of the switch device. By using a MOSFET as an example, the control electrode of the switch device is a gate electrode. The first electrode of the switch device may be a source electrode of the switch device, and the second electrode may be a drain electrode of the switch device. Alternatively, the first electrode may be the drain electrode of the switch device, and the second electrode may be the source electrode of the switch device.

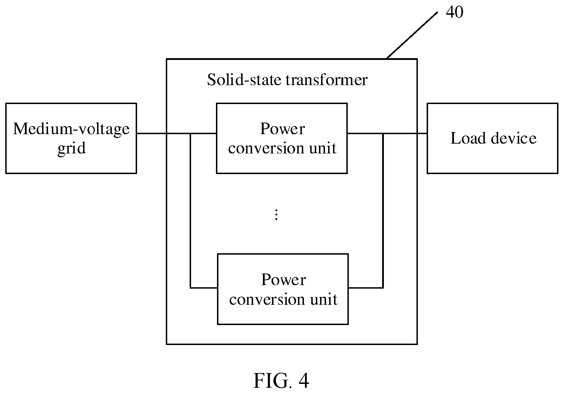

FIG. 4 shows a solid-state transformer according to an embodiment of this application. Refer to FIG. 4. The solid-state transformer 30 includes a plurality of power conversion units 41 connected in parallel. Each power conversion unit 41 converts a part of power received by the solid-state transformer 40, so that the solid-state transformer 40 implements high-power conversion.

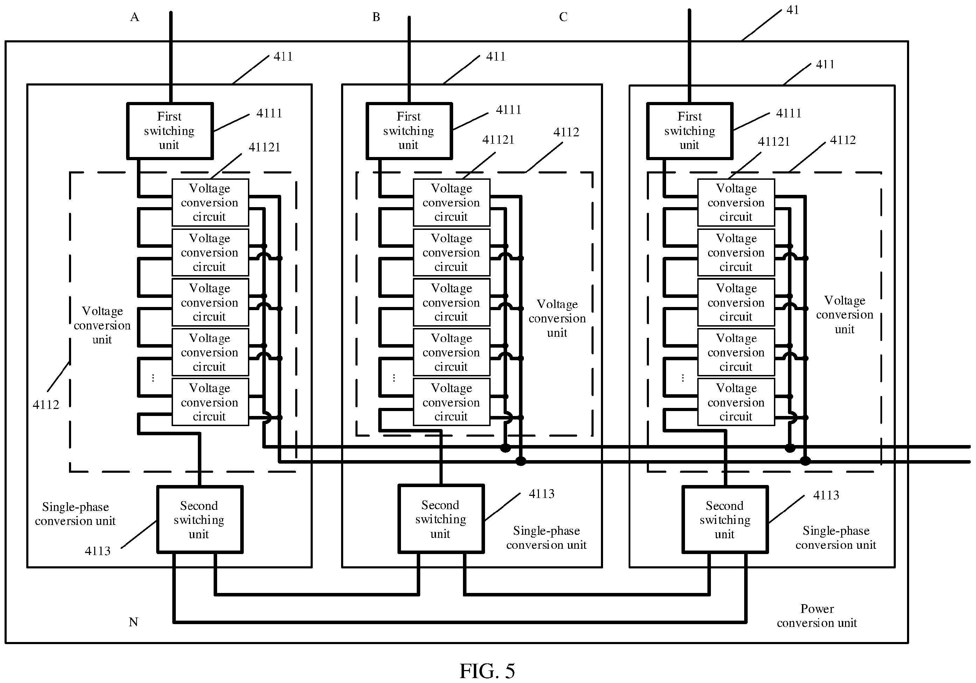

Refer to FIG. 5. Each power conversion unit 41 includes a plurality of single-phase conversion units 411, and each single-phase conversion unit 411 includes a first switching unit 4111, a voltage conversion unit 4112, and a second switching unit 4113.

Specifically, a first end of the first switching unit 4111 is a first input end of the single-phase conversion unit 411, and a second end of the first switching circuit 4111 is connected to a first input end of the voltage conversion unit 4112. A second input end of the voltage conversion unit 4112 is connected to a first end of the second switching unit 4113, and an output end of the voltage conversion unit 4112 is connected to an output end of the solid-state transformer 40. A second end of the second switching unit 4113 is a second input end of the single-phase conversion unit 411, and a third end of the second switching unit 4113 is connected to one of other single-phase conversion units 411.

If any voltage conversion circuit in the single-phase conversion unit 411 is faulty, the single-phase conversion unit may be used as a faulty single-phase conversion unit.

During specific implementation, the second input end of the single-phase conversion unit 411 is connected to one of the other single-phase conversion units 411 in the plurality of single-phase conversion units, and the third end of the second switching unit 4113 is connected to another single-phase conversion unit 411 in the other single-phase conversion units 411, to implement a connection between the single-phase conversion units 411 in the power conversion unit 41.

It should be understood that the power conversion unit 41 in FIG. 5 shows only three single-phase conversion units 411. During actual use, there may be a plurality of single-phase conversion units 411 in the power conversion unit 41. It should be understood that, when the power conversion unit 41 includes a plurality of single-phase conversion units 411, for implementing the connection between the single-phase conversion units 411, a corresponding port quantity needs to be set for the second switching unit 4113 in the single-phase conversion unit 411. For example, when a quantity of single-phase conversion units 411 in the power conversion unit 41 is five, the port quantity of the second switching unit 4113 may be five, where one port is connected to the voltage conversion unit 4112, and the other four ports are respectively connected to other single-phase conversion units 411 in the power conversion unit 41.

The following uses an example in which the power conversion unit 41 includes three single-phase conversion units 411 for description.

During actual use, the voltage conversion unit 4112 includes a plurality of voltage conversion circuits 41121 connected in series. The voltage conversion unit 4112 is configured to: when any voltage conversion circuit 41121 is faulty, control the connected first switching unit 4111 and second switching unit 4113 to be disconnected; or when another single-phase conversion unit 411 is faulty, disconnect, by using the connected second switching unit 4113, from the faulty single-phase conversion unit 411.

Specifically, an input end of the solid-state transformer 40 is connected to a medium-voltage grid, and an output end of the solid-state transformer 40 is connected to a load device. The medium-voltage grid may use a three-phase three-wire transmission manner, that is, the medium-voltage grid includes three phase lines, and each phase line outputs a single-phase alternating current.

A first input end of each single-phase conversion unit 411 is connected to one phase line of the medium-voltage grid, and a second input end of each single-phase conversion unit 411 and the third end of the second switching unit 4113 are separately connected to one single-phase conversion unit to form a neutral line N, to implement balance between three-phase alternating currents, so that the single-phase conversion unit 411 receives a single-phase alternating current, and converts the received single-phase alternating current.

During actual use, each phase line and the neutral line N form an electric energy transmission path by using the single-phase conversion unit 411, and are used to transmit the single-phase alternating current to the single-phase conversion unit 411. The single-phase conversion unit 411 converts the received single-phase alternating current.

During actual application, the single-phase conversion units 411 in each power conversion unit 41 are connected to a same neutral line, and the power conversion units 41 are connected to different neutral lines, so that each power conversion unit 41 operates independently.

With reference to FIG. 5, the first switching unit 4111 is connected to a phase line of the medium-voltage grid, and a second input end and the third end of the second switching unit 4113 are connected to other single-phase conversion units 411 in the power conversion unit 41 to form a neutral line N. Therefore, when a single-phase conversion unit 411 in the single-phase conversion unit 411 is faulty, the first switching unit 4111 and the second switching unit 4113 in the faulty single-phase conversion unit 411 are controlled to be disconnected, so that the faulty single-phase conversion unit 411 can be disconnected from the medium-voltage grid and the other single-phase conversion units 411 that are not faulty, so as to isolate a fault source. This ensures that the single-phase conversion unit 411 that is not faulty can operate normally. The power conversion unit 41 can continue to operate when the single-phase conversion unit 411 is faulty. This improves a fault-tolerant operation capability and conversion efficiency of the solid-state transformer 40.

In actual application, the solid-state transformer 40 may be fastened to the medium-voltage grid and the load device. In another implementation, the solid-state transformer 40 may be flexibly disposed and removable. For example, a fixed interface is disposed on the solid-state transformer 40, the medium-voltage grid may be connected to the solid-state transformer 40 through the fixed interface, and the load device may also be connected to the solid-state transformer 40 through the fixed interface. In this case, the solid-state transformer 40 is an apparatus independent of the medium-voltage grid and the load device.

The following describes in detail the first switching unit 4111, the voltage conversion unit 4112, and the second switching unit 4113 in the single-phase conversion unit 411.

### 1. First switching unit 4111

The first end of the first switching unit 4111 is the first input end of the single-phase conversion unit 411, the second end of the first switching unit 4111 is connected to the first input end of the voltage conversion unit 4112, and the first switching unit 4111 can connect the voltage conversion unit 4112 and a first input end of the solid-state transformer 40.

A function of the first switching unit 4111 is set as follows: When any voltage conversion circuit 41121 in the voltage conversion unit 4112 is faulty, the first switching unit 4111 can be controlled to be disconnected, so as to disconnect the voltage conversion unit 4112 from the medium-voltage grid. This prevents an increase of a fault range.

The first switching unit 4111 may include a first switch. A first electrode of the first switch is the first end of the first switching unit 4111, and is connected to the first input end of the single-phase conversion unit 411. A second electrode of the first switch is the second end of the first switching unit 4111, and is connected to the first input end of the voltage conversion unit 4112.

During actual use, a control electrode of the first switch is connected to the voltage conversion unit 4112. When a voltage conversion circuit 41121 in the connected voltage conversion unit 4112 is faulty, the control electrode of the first switch receives a drive signal sent by the voltage conversion unit 4112, and drives the first switch to be disconnected, to disconnect the voltage conversion unit 4112 from the phase line. This suppresses an increase of a fault range.

In an example, the first switching unit 4111 further includes a first resistor, and the first resistor is connected in parallel to the first switch. When the solid-state transformer 40 is started, for preventing damage to a component in the single-phase conversion unit 411 caused by an excessively large startup current, the first switch may be controlled to be turned off at a start moment, and the first resistor may limit the startup current. When the current is restored to normal, the first switch is controlled to be turned on. In this case, the first switch bypasses the first resistor, to prevent energy consumption of the first resistor.

For ease of understanding, the following provides a specific example of a structure of the first switching unit 4111.

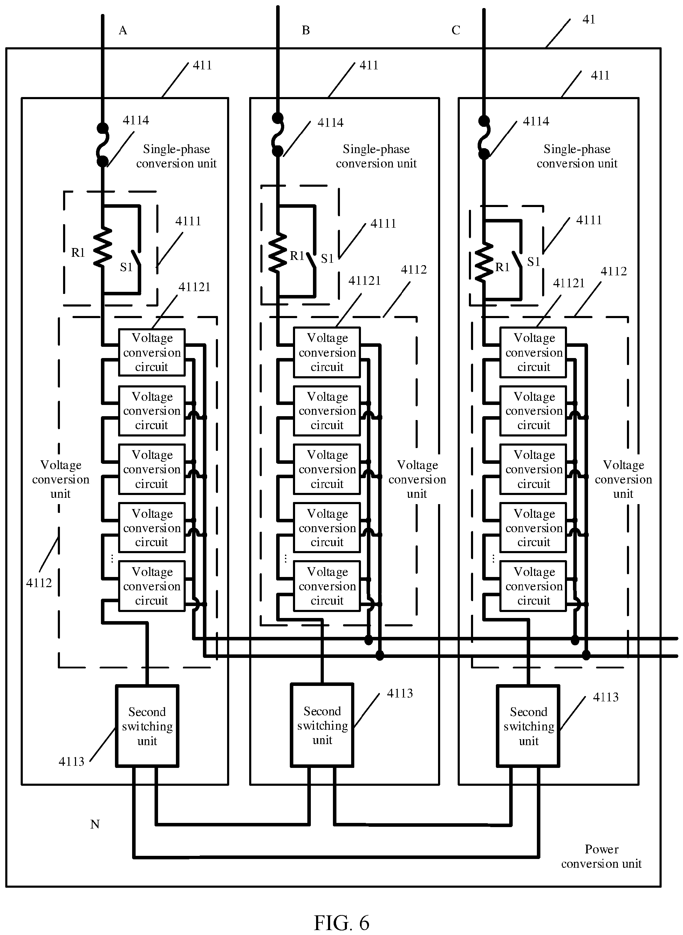

FIG. 6 is a schematic diagram of a structure of a first switching unit 4111 according to an embodiment of this application. In FIG. 6, S1 may be considered as the first switch, and R1 may be considered as the first resistor.

A connection relationship between components in the first switching unit 4111 shown in FIG. 6 may be as follows: A first electrode of the switch S 1 and a first end of the first resistor R1 are both connected to the first input end of the single-phase conversion unit 411, and a second electrode of the switch S 1 and a second electrode of the first resistor R1 are both connected to the first input end of the voltage conversion unit 4112.

The first switching unit 4111 shown in FIG. 6 is used. When a voltage conversion circuit 41121 in the voltage conversion unit 4112 is faulty, the voltage conversion unit 4112 sends, to a control electrode of S1, a drive signal used to drive S1 to be turned off. When receiving the drive signal, S 1 disconnects the first electrode from the second electrode. In this case, the faulty voltage conversion unit 4112 operates in a low current state, to prevent an increase of a fault range caused by damage to a voltage conversion circuit that is not faulty due to a fault, for example, a short circuit.

In an example, to prevent an increase of faulty components caused by a short-circuit fault in the voltage conversion unit 4112, the power conversion unit 41 further includes a protection unit connected to the first end of the first switching unit 4111. The protection unit may be configured to provide overload protection and short-circuit protection. The protection unit may be a mechanical control device, for example, a circuit breaker or a fuse. The protection unit may alternatively be an electronic control device, for example, an electronic switching transistor with a controller.

Optionally, the protection unit is disposed in the single-phase conversion unit 411. Refer to FIG. 6. The single-phase conversion unit 411 includes the protection unit 4114. One end of the protection unit 4114 is connected to a first end of the first switch in the first switching unit 4111. In this case, the other end of the protection unit 4114 is the first input end of the single-phase conversion unit 411.

Optionally, the protection unit is disposed in the power conversion unit 41, and the protection unit is independent of the single-phase conversion unit 411. The protection unit is connected to the first input end of the single-phase conversion unit 411.

Specifically, the protection unit includes a plurality of protection subunits, each of the plurality of protection subunits is in a one-to-one correspondence with each of the plurality of single-phase conversion units, one end of each protection subunit is connected to one phase line, and the other end of each protection subunit is connected to a first input end of a corresponding single-phase conversion unit, and provides overload protection and short-circuit protection for the connected single-phase conversion unit.

### 2. Voltage conversion unit 4112

The first input end of the voltage conversion unit 4112 is connected to the second end of the first switching unit 4111, the second input end of the voltage conversion unit 4112 is connected to the first end of the second switching unit 4113, and the output end of the voltage conversion unit 4112 is connected to the output end of the solid-state transformer 40.

Specifically, refer to FIG. 5 and FIG. 6. The voltage conversion unit 4112 includes a plurality of voltage conversion circuits 41121, input ends of the plurality of voltage conversion circuits 41121 are connected in series, and output ends of the plurality of voltage conversion circuits 41121 are connected in parallel. A high-potential input end of a 1^{st} voltage conversion circuit 41121 in the plurality of voltage conversion circuits 41121 connected in series is the first input end of the voltage conversion unit 4112, and a low-potential input end of a last voltage conversion circuit 41121 in the plurality of voltage conversion circuits 41121 connected in series is the second input end of the voltage conversion unit 4112.

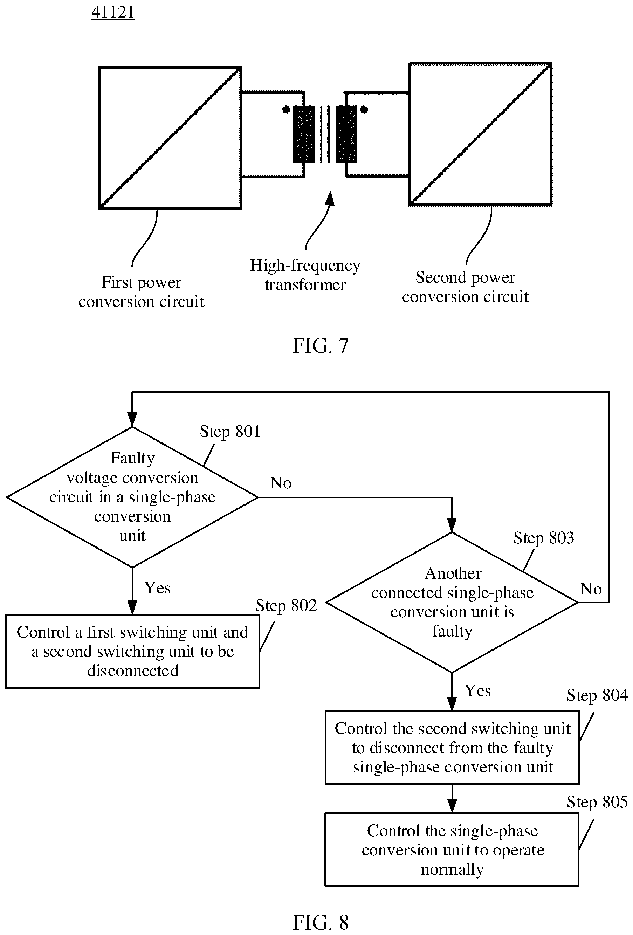

Refer to FIG. 7. Each voltage conversion circuit 41121 may include a first power conversion circuit (a medium-voltage side power conversion circuit), a high-frequency transformer, and a second power conversion circuit (a low-voltage side power conversion circuit). The first power conversion circuit and the second power conversion circuit may be coupled by using the high-frequency transformer. The first power conversion circuit is configured to connect to the medium-voltage grid, and the second power conversion circuit is connected to the load device through the output end of the solid-state transformer 40. It should be noted that the medium voltage and the low voltage represent merely two relative concepts, but do not limit a voltage magnitude. That is, a voltage of the medium-voltage side power conversion circuit is greater than a voltage of the low-voltage-side power conversion circuit.

During actual application, the first power conversion circuit and the second power conversion circuit in the voltage conversion circuit 41121 may include components such as a switching transistor, a diode, an inductor, and a capacitor. Operating states of the first power conversion circuit and the second power conversion circuit may be implemented by adjusting operating states of these components (for example, the switching transistor).

In this application, a controller may be used to adjust the foregoing operating states. To be specific, the voltage conversion circuit 41121 may further include a controller, and the controller may be configured to control the first power conversion circuit and the second power conversion circuit to perform conversion.

In a specific implementation, the controller may be any one of a micro control unit (micro controller unit, MCU), a central processing unit (central processing unit, CPU), and a digital signal processor (digital signal processor, DSP). Certainly, a specific form of the controller is not limited to the foregoing example.

The voltage conversion unit 4112 provided in this embodiment of this application is used. The voltage conversion unit 4112 is connected to the first switching unit 4111 and the second switching unit 4113, and controls statuses of the first switching unit 4111 and the second switching unit 4113.

In a possible implementation, one of the plurality of voltage conversion circuits 41121 is a target voltage conversion circuit, and the target voltage conversion circuit is connected to the first switching unit 4111 and the second switching unit 4113.

During specific use, when any voltage conversion circuit is faulty, the target voltage conversion circuit may control the connected first switching unit 4111 and second switching unit 4113 to be disconnected; or when another single-phase conversion unit 411 is faulty, the target voltage conversion circuit may disconnect from the faulty single-phase conversion unit 411 by using the connected second switching unit 4113.

During actual use, because the voltage conversion unit 4112 performs voltage conversion on a single-phase alternating current transmitted on one connected phase line, there may be a potential difference between the target voltage conversion circuit in the voltage conversion unit 4112, and the first switching unit 4111 and the second switching unit 4113. To enable the target voltage conversion circuit to control the statuses of the first switching unit 4111 and the second switching unit 4113, a voltage conversion component may be connected to the target voltage conversion circuit, to eliminate the potential difference between the target voltage conversion circuit, and the first switching unit 4111 and the second switching unit 4113.

In another example, the voltage conversion unit 4112 includes a first voltage conversion circuit 41121 and a second voltage conversion circuit 41121. The first voltage conversion circuit 41121 is connected to the first switching unit 4111, and the second voltage conversion circuit 41121 is connected to the second switching unit 4113.

During specific implementation, when any voltage conversion circuit 41121 is faulty, the first voltage conversion circuit 41121 may control the connected first switching unit 4111 to be disconnected. When any voltage conversion circuit 41121 is faulty, the second voltage conversion circuit 41121 may control the connected second switching unit 4113 to be disconnected; or when another single-phase conversion unit 411 is faulty, the second voltage conversion circuit 41121 may be disconnected from the faulty single-phase conversion unit by using the connected second switching unit 4113.

During actual use, because a potential of the 1^{st} voltage conversion circuit 41121 in the plurality of voltage conversion circuits 41121 is the same as a potential of the first switching unit 4111, and a potential of the last voltage conversion circuit 41121 in the plurality of voltage conversion circuits 41121 is the same as a potential of the second switching unit 4113, to reduce control difficulty, the 1^{st} voltage conversion circuit 41121 may be used as the first voltage conversion circuit 41121, and the last voltage conversion circuit 41121 may be used as the second voltage conversion circuit 41121.

It should be understood that, when the second switching unit 4113 is controlled to be disconnected, the faulty single-phase conversion unit 411 is disconnected from the single-phase conversion unit 411 that is not faulty, so as to isolate a fault source. This ensures that the single-phase conversion unit 411 that is not faulty can operate normally.

In a possible implementation, the voltage conversion circuit that is in the voltage conversion unit 4112 and that is configured to control the statuses of the first switching unit 4111 and the second switching unit 4113 may detect fault statuses of other voltage conversion units in the voltage conversion unit 4112 and fault statuses of the other single-phase conversion units.

Specifically, a first transmission channel is connected between the plurality of voltage conversion circuits 41121, and each voltage conversion circuit may determine the fault statuses of the other voltage conversion circuits based on the first transmission channel, so that the voltage conversion circuit that controls the statuses of the first switching unit 4111 and the second switching unit 4113 can determine fault statuses of the plurality of voltage conversion circuits 41121 in the voltage conversion unit 4112.

During actual use, there is a first transmission channel between controllers of all voltage conversion circuits.

During specific implementation, to determine fault statuses of the plurality of single-phase conversion units 411, a second transmission channel is connected between the plurality of single-phase conversion units in each power conversion unit 41, and each single-phase conversion unit 411 may determine fault statuses of the other single-phase conversion units based on the second transmission channel.

Based on the foregoing description, refer to FIG. 8. An operating process of the target voltage conversion circuit may include the following steps.

A sequence of steps in the following does not represent an actual execution sequence. Therefore, this application is not limited to an execution case in which steps are performed exactly in the following sequence.

Step 801: Determine whether there is a faulty voltage conversion circuit in the single-phase conversion unit; and if there is a faulty voltage conversion circuit in the single-phase conversion unit, perform step 802; otherwise, return to perform step 803.

Step 802: Control the first switching unit and the second switching unit to be disconnected, and continue to perform step 803.

Step 803: Determine whether the connected single-phase conversion unit is faulty; and if the connected single-phase conversion unit is faulty, perform step 804; otherwise, return to perform step 801.

Step 804: Control the second switching unit to disconnect from the faulty single-phase conversion unit, and return to perform step 805.

In step 805, the single-phase conversion unit operates normally.

### 3. Second switching unit 4113

The first end of the second switching unit 4113 is connected to the second input end of the voltage conversion unit, the second end of the second switching unit 4113 is the second input end of the single-phase conversion unit 411, and the third end of the second switching unit 4113 is connected to the other single-phase conversion units 411 in the plurality of single-phase conversion units.

During specific implementation, the second end of the second switching unit 4113 is connected to one of the other single-phase conversion units 411, and the third end of the second switching unit 4113 is connected to another single-phase conversion unit in the other single-phase conversion units 411, to implement a mutual connection between the single-phase conversion units.

The second switching unit 4113 includes a second switch and a third switch. Both a first electrode of the second switch and a first electrode of the third switch are connected to the second input end of the voltage conversion unit 4112, a second electrode of the second switch is connected to the second input end of the single-phase conversion unit 411, and a second electrode of the third switch is connected to one of the other single-phase conversion units 411. The second electrode of the second switch is connected to one single-phase conversion unit 411 by using the second input end of the single-phase conversion unit 411, and the second electrode of the second switch and the second electrode of the third switch are connected to different single-phase conversion units.

For ease of understanding, the following provides a specific example of a structure of the second switching unit 4113.

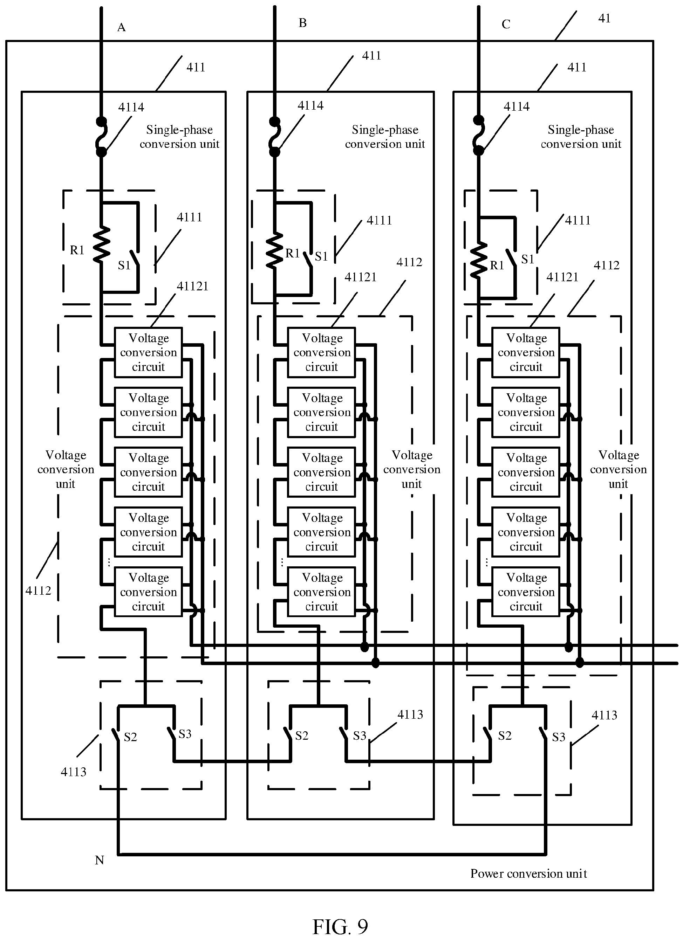

FIG. 9 is a schematic diagram of a structure of a second switching unit 4113 according to an embodiment of this application. In FIG. 9, S2 may be considered as the second switch, and S3 may be considered as the third switch.

A connection relationship between components in the second switching unit 4113 shown in FIG. 9 may be as follows: A first electrode of S2 is connected to the low-potential input end of the last voltage conversion circuit in the plurality of voltage conversion circuits connected in series, and a second electrode of S2 is connected to a second switching unit of one single-phase conversion unit 411. A first electrode of S3 is connected to the low-potential input end of a last voltage conversion circuit in the plurality of voltage conversion circuits connected in series, and a second electrode of S3 is connected to a second switching unit of another single-phase conversion unit 411.

For example, the power conversion unit 41 includes three single-phase conversion units 411. Each first switching unit 4111 includes two switches S2 and S3, and a second electrode of the switch S2 in the single-phase conversion unit 411 that receives a phase-A alternating current is connected to a second electrode of the switch S3 in the single-phase conversion unit 411 that receives a phase-C alternating current, a second electrode of the switch S3 in the single-phase conversion unit 411 that receives the phase-A alternating current is connected to a second electrode of the switch S2 in the single-phase conversion unit 411 that receives a phase-B alternating current, and a second electrode of S3 in the single-phase conversion unit 411 that receives the phase-B alternating current is connected to a second electrode of the switch S2 in the single-phase conversion unit that receives the phase-C alternating current, so as to implement a connection between all single-phase conversion units in the power conversion unit.

The second switching unit 4113 shown in FIG. 9 is used. When a voltage conversion circuit in the voltage conversion unit 4112 is faulty, a drive signal used to drive the switches S2 and S3 to be turned off is sent to the second switching unit 4113. When receiving the drive signal, the switches S2 and S3 in the second switching unit 4113 disconnect the first electrode from the second electrode, to disconnect the faulty single-phase conversion unit from a single-phase conversion unit that is not faulty, so as to isolate a fault source. This ensures that the single-phase conversion unit that is not faulty can operate normally.

The second switching unit 4113 shown in FIG. 9 is used. When another single-phase conversion unit is faulty, a drive signal used to drive the switch to be turned off is sent to S2 or S3 connected to the faulty single-phase conversion unit. The switch S2 or S3 connected to the faulty single-phase conversion unit receives the drive signal, and disconnects the faulty single-phase conversion unit, so as to isolate a fault source. This ensures that a single-phase conversion unit that is not faulty can operate normally.

Based on a same inventive concept, an embodiment of this application further provides a power supply system. The power supply system may include a cabinet and the solid-state transformer 40. The solid-state transformer 40 is disposed in the cabinet.

The solid-state transformer 40 is connected to a medium-voltage grid and a load device separately. The solid-state transformer 40 may convert electric energy transmitted on the medium-voltage grid, and output converted electric energy to the load device. The medium-voltage grid may be a charging pile or a medium-voltage grid.

The solid-state transformer 40 further includes a conductive housing. The conductive housing may be connected to the cabinet, or the conductive housing may be directly grounded, so as to meet a safety requirement of the solid-state transformer 40.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A solid-state transformer, comprising a plurality of power conversion units connected in parallel, wherein
each power conversion unit comprises a plurality of single-phase conversion units, and each single-phase conversion unit comprises a first switching unit, a voltage conversion unit, and a second switching unit;
a first end of the first switching unit is a first input end of the single-phase conversion unit, a second end of the first switching unit is connected to a first input end of the voltage conversion unit, a second input end of the voltage conversion unit is connected to a first end of the second switching unit, an output end of the voltage conversion unit is connected to an output end of the solid-state transformer, a second end of the second switching unit is a second input end of the single-phase conversion unit, and a third end of the second switching unit is connected to one of other single-phase conversion units in the plurality of single-phase conversion units; and
the voltage conversion unit comprises a plurality of voltage conversion circuits connected in series, and the voltage conversion unit is configured to: when any voltage conversion circuit is faulty, control the connected first switching unit and second switching unit to be disconnected; or when another single-phase conversion unit is faulty, disconnect, by using the connected second switching unit, from the faulty single-phase conversion unit.

2. The solid-state transformer according to claim 1, wherein the voltage conversion circuit comprises a first power conversion circuit, a high-frequency transformer, and a second power conversion circuit, and the first power conversion circuit and the second power conversion circuit are coupled by using the high-frequency transformer.

3. The solid-state transformer according to claim 1 or 2, wherein the first switching unit comprises a first switch, wherein
a first electrode of the first switch forms the first end of the first switching unit, and a second electrode of the first switch forms the second end of the first switching unit and is connected to the first input end of the voltage conversion unit.

4. The solid-state transformer according to any one of claims 1 to 3, wherein the second switching unit comprises a second switch and a third switch, wherein
both a first electrode of the second switch and a first electrode of the third switch are connected to the second input end of the voltage conversion unit;
a second electrode of the second switch is the second input end of the single-phase conversion unit;
a second electrode of the third switch is connected to one of the other single-phase conversion units; and
the second input end of the single-phase conversion unit is connected to one of the other single-phase conversion units, and the second electrode of the second switch and the second electrode of the third switch are connected to different single-phase conversion units.

5. The solid-state transformer according to any one of claims 1 to 4, wherein one of the plurality of voltage conversion circuits is a target voltage conversion circuit, and the target voltage conversion circuit is connected to the first switching unit and the second switching unit; and
the target voltage conversion circuit is specifically configured to: when any voltage conversion circuit is faulty, control the connected first switching unit and second switching unit to be disconnected; or when another single-phase conversion unit is faulty, disconnect, by using the connected second switching unit, from the faulty single-phase conversion unit.

6. The solid-state transformer according to any one of claims 1 to 4, wherein the plurality of voltage conversion circuits comprise a first voltage conversion circuit and a second voltage conversion circuit, wherein
the first voltage conversion circuit is connected to the first switching unit;
the second voltage conversion circuit is connected to the second switching unit;
the first voltage conversion circuit is configured to: when any voltage conversion circuit is faulty, control the connected first switching unit to be disconnected; and
the second voltage conversion circuit is configured to: when any voltage conversion circuit is faulty, control the connected second switching unit to be disconnected; or when another single-phase conversion unit is faulty, disconnect, by using the connected second switching unit, from the faulty single-phase conversion unit.

7. The solid-state transformer according to claim 3, wherein the power conversion unit further comprises a protection unit connected to the first end of the first switching unit.

8. The solid-state transformer according to claim 5, wherein there is a first transmission channel between controllers in the plurality of voltage conversion circuits, and each voltage conversion circuit determines fault statuses of other voltage conversion circuits based on the first transmission channel.

9. The solid-state transformer according to claim 5, wherein there is a second transmission channel between the plurality of single-phase conversion units, and each single-phase conversion unit determines fault statuses of the other single-phase conversion units based on the second transmission channel.

10. A power supply device, comprising a cabinet and the solid-state transformer according to any one of claims 1 to 9, wherein the solid-state transformer is disposed in the cabinet.
